# EUROPEAN PATENT SPECIFICATION

(11) **EP 1 747 469 B1**
(45) Date of publication and mention of the grant of the patent: **08.05.2013**
(21) Application number: 05731672.1
(22) Date of filing: 16.03.2005
(51) Int. Cl.: G01N 21/05, G01N 21/64, G01N 21/75

(54) **STIMULATED DETECTION OF SAMPLE COMPOUNDS**
STIMULIERTER NACHWEIS VON PROBENVERBINDUNGEN
DETECTION STIMULEE DE COMPOSES ECHANTILLONS

(30) Priority: 07.05.2004 US 569071 P
(43) Date of publication of application: 31.01.2007
(73) Proprietor: Agilent Technologies, Inc., Santa Clara CA 95051 (US)
(72) Inventor: WITT, Klaus, 75210 Keltern (DE); ROITMAN, Daniel, 94025 Menlo Park (DE)
(74) Representative: Dilg, Haeusler, Schindelmann Patentanwaltsgesellschaft mbH
(86) International application number: PCT/EP2005/051205
(87) International publication number: WO 2005/109007

(56) References cited:
- EP-A- 0 859 230
- EP-A- 1 348 962
- US-A- 3 759 816
- US-A- 4 650 750
- US-A1- 2002 041 375
- US-A1- 2003 090 649
- US-A1- 2004 048 360
- US-A1- 2004 084 612

## Description

### BACKGROUND

The present invention relates to a measurement set-up for detecting sample compounds of a sample. Furthermore, the invention relates to a method for detecting at least one sample compound of a sample.

There exist a variety of different detection techniques for detecting sample compounds of a sample. However, depending on the selected detection technique and on the properties of the respective molecular species, the quality of the obtained detection signal relative to the background signal varies considerably.

US 2003/0090649 A1 discloses a reagent-less whole-blood glucose meter. A light source power modulation for use with chemical and biochemical analysis is described in US 2002/0041375 A1. Various aspects in detection in chromatography are addressed in US 3,759,816 A. US 2004/0084612 A1 discloses a scanning system with calibrated detection. EP 1348962 A1, by the same applicant, discloses biomolecular sensors and detection methods. Detection of analytes using electrochemistry is described in EP 0859230 A1. Microfluidic analytic detection assays, devices and integrated systems are disclosed in US 2004/0048360 A1. US 4,650,750 A relates to chemical analysis employing molecular release tag compounds.

### DISCLOSURE

It is an object of the invention to improve the detectability of given molecular species. The object is solved by the independent claims. Preferred embodiments are shown by the dependent claims.

According to embodiments of the present invention, a measurement set-up for detecting at least one sample compound of a sample comprises a detection flow path with a first detection cell, and a sample compound labeled with a marker tag which comprises a polymeric portion with a multitude of segments, whereby at least one of the bonds between the segments is a cleavable bond, wherein the detection cell comprises an activation facility adapted for inducing at least one of a physical and a chemical modification of at least one sample compound, in order to generate one or more derived species, wherein the sample compound is labeled with a marker tag in advance. The activation facility comprises at least one of a light source adapted for irradiating light with predefined spectral components onto the sample, a heater element adapted for heating up at least parts of the sample, and a HF source adapted for applying a HF field to the sample. The detection cell further comprises a detection facility adapted for detecting a detectable property that is directly or indirectly affected by the presence of at least one of the derived species, wherein the property is at least one of: the sample's pH value and an electrical property. Furthermore, the detection cell is adapted to fragment the tagged species into a plurality of derived species by applying a stimulus adapted for breaking up cleavable bonds of the tagged species.

Before being detected, the one or more sample compounds of interest are activated, which means that they are transformed into one or more derived species. The derived species are chosen such that, with regard to the respective detection technique, a good detectability is accomplished. The detectable property that is determined by the detection facility strongly depends - directly or indirectly - on the presence of the derived compounds. The evaluation of the detectable property allows detecting the presence of the one or more derived species, which in turn depends upon the presence of the sample compound of interest. Using this detection technique, the presence of the compound of interest can be detected based on a detection signal with excellent signal-to-noise characteristics.

By providing an activation facility adapted for physically or chemically modifying the compound of interest, an additional degree of freedom is introduced to the detection system. By suitably adapting the derived species to the detection technique, the detectability of the compound of interest can be significantly improved. Furthermore, it becomes possible to enable or disable the activation facility. The detectable property can thus be determined for the case of the activation facility being enabled as well as for the case of the activation facility being disabled. This allows distinguishing the contribution of the derived species from background noise. The detectability of the compound of interest can e. g. be activated at the same location where the detection takes place. However, the activation facility might as well be located upstream of the detection facility.

The sample compound of interest is labeled with a marker tag in advance. The marker tag is chosen in a way that the labeled molecule is susceptible to some kind of physical or chemical modification. Upon applying a stimulus to the tagged species, one or more derived species are generated, whereby the derived species yield a good detection signal. Marker tags can be designed in a way that they specifically attach to certain molecules, or to certain binding sites.

One or more of the marker tags' bonds are cleavable bonds that can be broken up by applying a suitable stimulus. According to this embodiment, a stimulus generated by the activation facility may break up cleavable bonds of the tagged species, in order to generate one or more derived species, which might e. g. be fragments of the tagged species. Then, a detectable property of at least one of the derived species can be determined.

Preferably, the polymeric portion comprises a multitude of cleavable bonds, such that the polymeric portion can be broken up into a multitude of segments. When a stimulus is applied to a tagged species that has been labeled with a polymeric marker tag, a large number of secondary molecules per molecule of the tagged species can be generated. The large number of secondary molecules improves the detectability of the secondary molecules specific properties. Due to the large concentration of the secondary molecules, a detection signal with good signal-to-noise ratio is obtained.

In a preferred embodiment, the at least one compound of interest is physically or chemically modified in an irreversible manner, which means that it does not return to its initial state. The derived compounds remain stable, which simplifies their detection.

In a preferred embodiment, the derived species comprise charged ions. Charged ions strongly affect the electrical properties of the sample. Their presence can be analyzed with a variety of different techniques, e. g. by measuring the detection volume's conductivity. In another preferred embodiment, the derived species comprise acidic species, or basic species. The presence of these compounds can either be detected by measuring the pH in the detection volume directly, or by observing secondary effects that are induced by lowering or increasing the pH in the respective volume. For example, lowering the sample's pH might induce a transformation of a leucodye into a fluorescent dye, which can then be detected using common fluorescence detection techniques.

There exist a variety of different possibilities how a stimulus can be applied to a species of interest, in order to transform the species of interest into one or more derived compounds. In a preferred embodiment, a species of interest is modified by means of light. Light with well-defined visible or ultraviolet components is capable of breaking up predetermined bonds of the species of interest. In particular, with regard to biomolecules, conformational changes and charge transfers can be induced by means of light. Light can be applied selectively. By filtering the incident light, it is possible to select the spectral components a species of interest is subjected to.

Modem light sources, like lasers, exhibit certain specific and well defined wavelengths.

According to another preferred embodiment, a heater element is used for applying a stimulus to the sample. For example, heat might be used for stimulating secondary reactions. In yet another embodiment, the activation energy is provided to the sample by means of a HF field, preferably by means of a HF field in the microwave range. The spectrum of emitted HF frequencies can be adapted to the resonances and absorption peaks of a respective species of interest.

Furthermore, there exist a variety of different possibilities for detecting the presence of at least one of the derived species. According to one preferred embodiment, the detectable property is an optical property of one of the derived compounds, such as e.g. fluorescence within a well-defined spectral range, absorption, polarization, etc. In preferred embodiments, the detection facility comprises at least one of a fluorescence detection unit, a spectrum analyzer, an optical resonant detection unit like e.g. an RIfS (Reflectometry Interference Spectroscopy) unit, a polarization analyzer, etc.

According to another embodiment, the presence of at least one of the derived compounds is detected by determining the solution's pH. In this embodiment, the detection facility might be equipped with a pH meter.

According to yet another preferred embodiment, the presence of at least one of the derived species is determined by evaluating the response of the respective species to HF radiation. For this purpose, the detection facility might e.g. comprise a unit for measuring intensity of HF radiation, and in particular for evaluating the sample's HF absorption. In this embodiment, a certain species might e.g. be identified according to the locations of its HF absorption pattern.

In another preferred embodiment, the presence of at least one of the derived species is detected by analyzing an electrical property of said species, such as e.g. resistance, impedance, reactance, conductivity, complex conductivity, relative permittivity, dielectric dispersion, etc. The detection facility might e.g. be adapted for analyzing the respective electrical property at a predetermined AC frequency. Alternatively, the detection facility might e.g. be adapted for analyzing the spectral behavior of the respective electrical property as a function of the applied AC frequency.

In a preferred embodiment, the detection facility comprises a transmitter electrode for transmitting an AC current into the sample, and a receiver electrode for analyzing the transmitted AC current. The detection cell of this type allows determining electrical properties of the sample, and in particular the sample's conductivity, within a wide range of AC frequencies.

According to a preferred embodiment, both the activation of the sample and the detection of the derived species take place at one common location. Due to this "rendezvous" between activation and detection, it is made sure that all the molecules of the derived species are detected. Furthermore, there is no time delay between the generation of the derived species and the detection thereof.

This is especially advantageous with regard to another preferred embodiment, in which the activation is modulated according to some kind of modulation frequency or modulation pattern. If the stimulus for generating one or more derived species is modulated according to some kind of modulation frequency or modulation pattern, said modulation frequency or modulation pattern might as well be observed in a detected property of at least one derived species.

According to yet another preferred embodiment, transmission spectra or absorption spectra of the respective stimulus are recorded in addition to the respective detectable property of the derived species. In particular, at least one of an optical transmission spectrum, an optical absorption spectrum, a HF transmission spectrum and an HF absorption spectrum might be recorded, in order to provide additional information about the various sample compounds.

According to a preferred embodiment, the detection cell as described above is part of a detection flow path. In a further preferred embodiment, said detection flow path is preceded by a separation flow path, which might e.g. be adapted for separating compounds of a given sample. The detection cell might e.g. be part of an electrophoresis system, a liquid chromatography system, or an electro-chromatography system.

In yet another preferred embodiment, the measurement set-up comprises a first detection cell of the type described above, a second separation flow path adapted for separating the derived species, which is arranged downstream of the first detection cell, and a second detection cell adapted for detecting a detectable property of the derived species. After the various derived species have been separated by the second separation flow path, their contribution to the respective detectable property can be separately determined for each one of the derived species. Furthermore, for each of the species, the time interval required for traveling from the first detection cell via the second separation flow path to the second detection cell can be determined. From these time intervals, the respective mobilities of the various species can be derived. This might e.g. be helpful for determining the respective concentrations of said species.

In yet another preferred embodiment, the measurement set-up further comprises a calibration cell located upstream of the first detection cell. Said calibration cell allows determining the value of the detectable property with regard to the background electrolyte, which might e.g. be subtracted from the overall value determined by the first detection cell.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).
- Fig. 1: shows different ways of labeling a species of interest;
- Fig. 2: illustrates how a species of interest can be activated;
- Fig. 3: shows how cleavable bonds of a tagged molecule are broken up;
- Fig. 4: depicts different embodiments of an activation facility;
- Fig. 5: shows how various different marker tags are broken up into fragments by applying a stimulus;
- Fig. 6: shows different embodiments of the detection facility;
- Fig. 7: shows an example embodiment that has been realized using a glass capillary;
- Fig. 8: depicts another example embodiment that has been implemented by means of a microfluidic chip device;
- Fig. 9: shows a flow path adapted for dynamically labeling a species of interest; and
- Fig. 10: shows a measurement set-up comprising a first detection cell, a separation flow path for the derived species, and a second detection cell.

### DETAILED DESCRIPTION OF EMBODIMENTS OF THE INVENTION

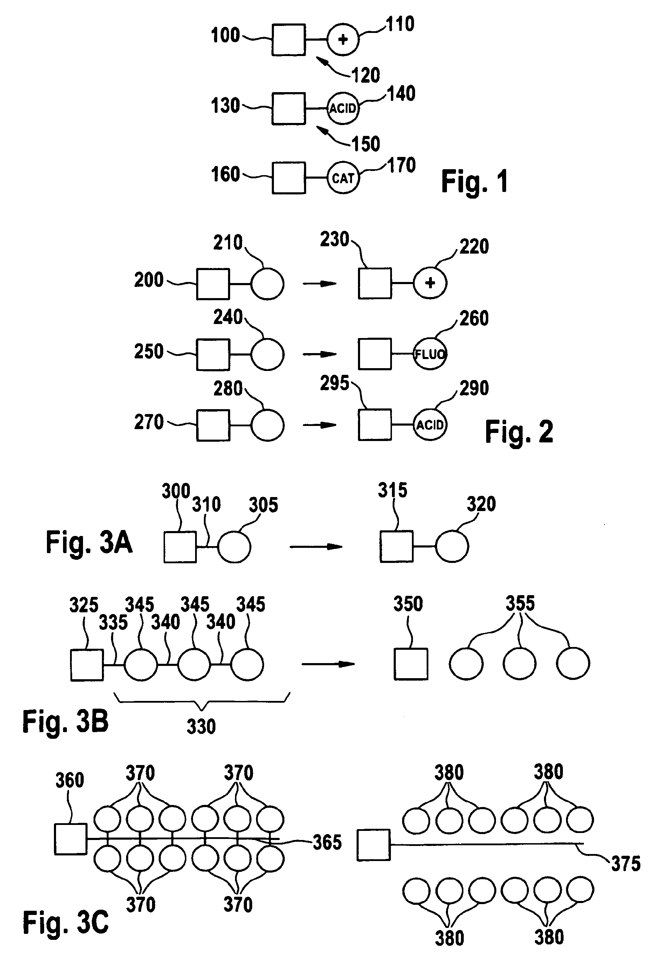

For detecting the presence of a molecular species, such as e.g. a biomolecular species, a marker tag having a well-defined detectable property can be attached to the molecular species of interest. Fig. 1 shows three examples of this strategy. For example, for detecting the presence of the molecular species 100, which is not charged at all, a positively charged marker tag 110 is attached to the molecular species 100. The concentration of the tagged species 120 has an impact on the electrical properties of the liquid zone in which such sample is present. For example, the presence of the tagged species 120 in a liquid zone can be detected using a CCD (Contactless Conductivity Detection) cell.

Furthermore, for detecting another molecular species 130, the molecular species 130 might be labeled with an acidic marker tag 140. The presence of the tagged species 150 may lower the pH of the liquid zone in which it is dissolved. Of course, instead of an acidic marker tag 140, a basic marker tag adapted for increasing the pH might be used as well. The presence of the tagged species 150 can be detected using a pH-sensitive detection cell. Alternatively, a property that depends on the pH in such liquid zone can be detected in order to determine the presence of the tagged species 150. The changed pH might influence the equilibrium constant of various chemical reactions in a way that the concentration of certain compounds is either increased or decreased. As a consequence, due to the changed pH, a change of other properties, like e.g. conductivity, might be observed.

Besides that, a molecular species 160 can be labeled with a tag 170 that acts as a catalytic for one or more secondary chemical reactions. Then, instead of detecting the molecular species itself, the products of this secondary reaction can be detected.

In the embodiments shown in Fig. 1, a molecular species is labeled with a tag in order to add a certain detectable property. The embodiments that will be discussed in the following further comprise some kind of mechanism for purposely activating a respective detectable property. For example, the detectable property might be activated by applying a stimulus such as light, heat, electromagnetic fields, etc.

Fig. 2 shows a few examples of tagged molecular species, whereby a detectable property of the tag can be activated by supplying a stimulus. The molecule 200 has been labeled with a tag 210. Initially, the tag 210 is not charged. By applying a stimulus, the tag 210 can be transformed into an ionized tag 220. After the stimulus has been applied, the presence of the molecule 230 will therefore have an impact on the liquid zone's electrical properties.

To the molecule 250, a marker tag 240 has been attached, which can be converted into a fluorescent marker tag 260 by applying a stimulus. For example, the presence of a catalyst, which can also be regarded as a stimulus, might catalyze the conversion of a leucodye into a fluorescent dye.

In the last example of Fig. 2, a molecular species 270 has been labeled with a marker tag 280. The tag can be converted, by means of a stimulus, into an acidic marker tag 290. The presence of the molecular species 295 can thus be detected by observing the sample's pH, or by observing a property that depends on the sample's pH. Instead of an acidic tag, a basic tag can be used as well.

In the following, embodiments of the invention are described in which the stimulus induces a chemical modification of the tagged species. In Fig. 3A, a first example is shown. The molecular species of interest 300 is labeled with a marker tag 305, whereby the chemical bond 310 between the molecular species 300 and the tag 305 is a cleavable bond that can be broken up by applying a stimulus. The tag 305 can e.g. be cleaved off by applying one of light, heat, and HF radiation, by means of a catalyst or other suitable means. As a result, the molecular species 315 without tag and the isolated tag 320 are obtained as derived species. The presence of the molecular species 315 can be detected by determining a property that depends on the concentration of the isolated tags 320.

In Fig. 3B, another embodiment is shown, in which a molecule 325 is labeled with a polymeric tag 330. Both the bond 335 between the molecule and the tag and the bonds 340 between monomers 345 are cleavable bonds. If a stimulus is applied to the tagged molecule, the bonds will be broken up, and the tag molecule will be fragmented into an untagged molecular species 350 and into a secondary species 355. Next, a property that is effected by the concentration of the secondary species 355 is determined.

Fig. 3C shows yet another embodiment, in which a species of interest 360 is labeled with a backbone 365 holding a multitude of attached tags 370. The bonds between the backbone 365 and the tags 370 are cleavable bonds. Upon application of a stimulus, the tagged species is fragmented into a molecular species 375 without tags, and into a secondary species 380, with the secondary species 380 being adapted for effecting any kind of detectable property.

Compared to the embodiment of Fig. 3A, the embodiments of Fig. 3B and Fig. 3C provide a higher yield of the secondary species 355, 380 per molecule of interest. Compared to the embodiment of Fig. 3A, a better signal to noise ratio is obtained, and the accuracy of the measurement is improved.

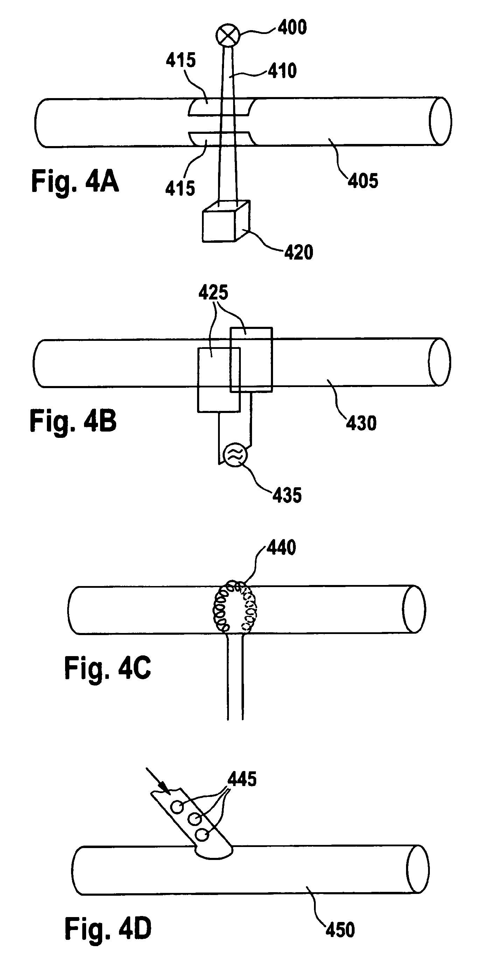

Fig. 4A to 4D show four different ways of applying a stimulus to a sample volume. In the embodiment of Fig. 4A, a light source 400 is mounted next to the flow path 405. The light source 400 emits a beam 410 of white light that is directed towards the sample. The light emitted by the light source 400 might comprise a range of spectral components or just a single wavelength, like lasers. In particular, the spectral components may comprise at least one of visible components and UV components that are capable of breaking up cleavable bonds of the tagged species. In case the emitted spectrum comprises UV components, it might become necessary to provide the flow path 405 with quartz windows 415, because glass is not transparent with regard to UV light. Whenever a certain bond is broken up by a certain spectral component of the incident light, the respective spectral component is at least partially absorbed. In order to gather further information about the molecular species within the sample, the set-up might optionally comprise a spectral-photometer 420 adapted for recording the transmitted spectrum. The transmitted spectrum indicates the spectral components that have been absorbed by the sample. Instead of a source of white light 400, a laser source can be used, with the wavelength of the emitted laser light being adapted for breaking up cleavable bonds of the tagged species.

In another variant, a HF field is applied to the sample as a stimulus. For this purpose, HF antennas 425 are mounted in the vicinity of the flow path 430. A high frequency voltage, which is generated by a HF voltage source 435, is supplied to the HF antennas 425. The microwave field emitted by the HF antennas 425 might e.g. be used for breaking up non-covalent bonds (like e.g. Van-der-Waals interactions) or for activating rotational degrees of freedom. For determining the HF frequencies that are absorbed by the sample's molecules, a HF absorption spectrum can be recorded additionally.

As shown in Fig. 4C, the stimulus might as well be applied by means of a heater 440 that locally heats up the sample. Further alternatively, as shown in Fig. 4D, the tagged molecules might be activated by means of a catalyst 445 that is supplied to the sample at a certain position of the flow path 450. For injecting the catalyst, the flow path might be equipped with a Y-shaped tubing. The catalyst 445 triggers the conversion of the tagged species into a detectable species.

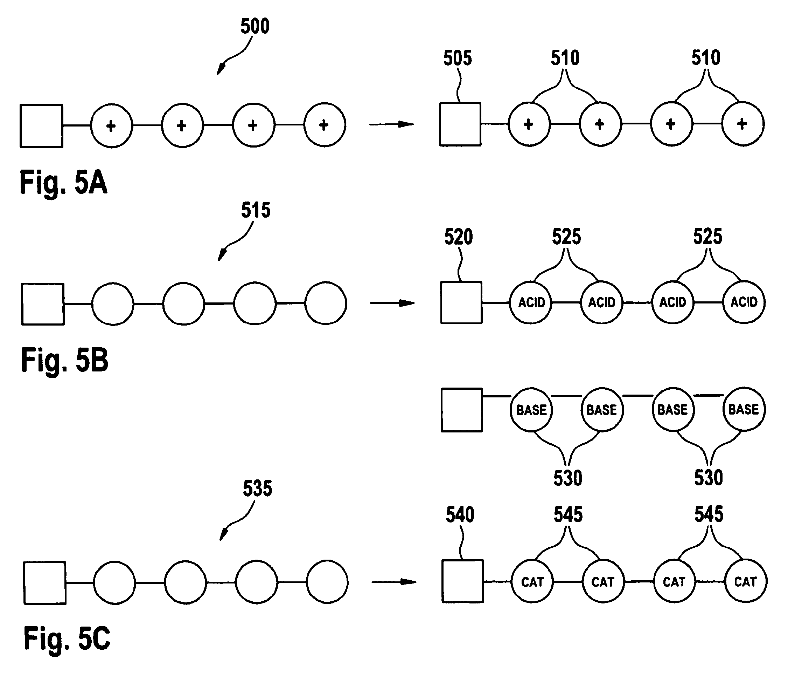

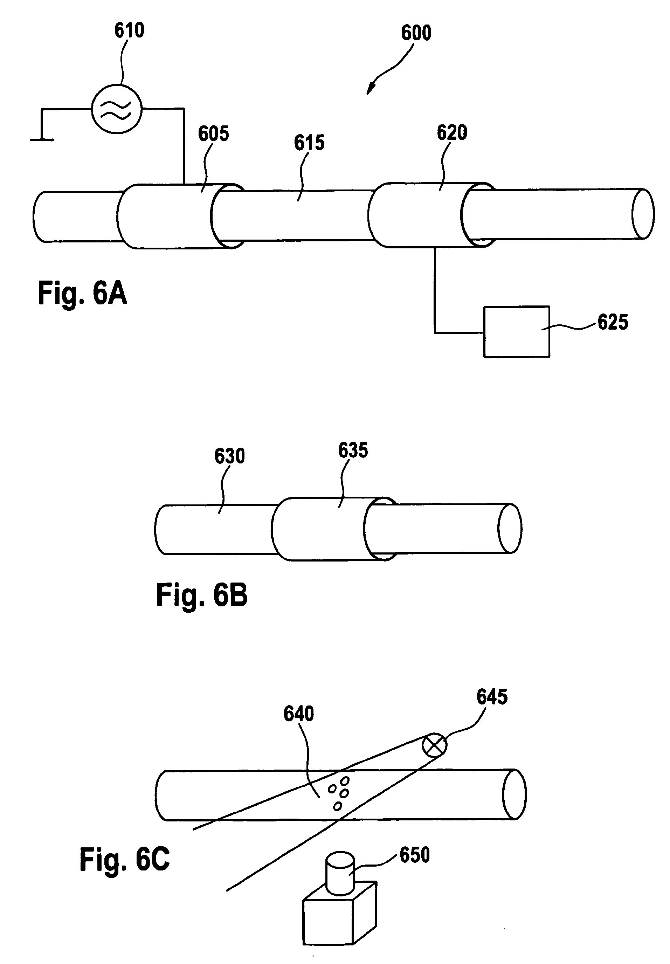

In the following, several detectable properties and the corresponding detection techniques will be discussed with regard to Fig. 5A to 5C and Fig. 6A to 6C.

In Fig. 5A, it is shown how the tagged molecule 500 can be fragmented into an isolated compound 505 and a plurality of charged ions 510. If the size of the charged ions 510 is rather small, their mobility µ will be large, and for this reason, the presence of the charged ions 510 will significantly influence the sample's electrical properties.

The sample's electrical properties can e.g. be monitored using a contactless detection cell as shown in Fig. 6A. The contactless detection cell 600 comprises a transmitter electrode 605, which is connected to an AC power supply 610. An AC current is capacitively coupled to a detection volume 615. The AC current is capacitively coupled to a receiver electrode 620, and the received detection signal is provided to an amplification and detection unit 625 adapted for determining an electrical property of the sample, in particular one of resistance, impedance, reactance, conductivity, complex conductivity, relative permittivity, dielectric dispersion. The contactless detection cell 600 is well-suited for detecting a change of the sample's electrical properties induced by the generation of charged ions 510. The contactless detection cell 600 might additionally be adapted for detecting the sample's AC response within a range of AC frequencies. For example, the AC power supply 610 might be adapted for varying the frequency of the AC current within a certain frequency range. The detection signal is recorded as a function of frequency, in order to detect characteristic resonance peaks of the sample compounds.

Another example system is shown in Fig. 5B. By applying a stimulus such as light, heat, a catalyst, etc., the tagged molecular species 515 can be broken up into an untagged species 520 and into a plurality of acidic compounds 525. Alternatively, the tagged molecular species might as well be broken up into an untagged species and into a plurality of basic compounds 530. In this embodiment, the presence of the tagged species 515 can e.g. be detected by applying a stimulus and monitoring the sample's pH. For this purpose, the flow path 630 shown in Fig. 6B might comprise a pH cell 635, such as e.g. a Lieber sensor manufactured by Nanosys.

Alternatively, the lowered pH of the sample that is due to the presence of the acidic compound 525 may induce a transformation of a non-detectable species into a detectable species. In this case, the presence of the acidic compound 525 is indicated by the presence of said detectable species. For example, the presence of the acidic compound 525 might induce a transformation of a leucodye into a fluorescent dye. With a fluorescence measurement set-up as shown in Fig. 6C, the approximate concentration of the fluorescent dye within the detection cell volume 640 can be determined. Fluorescence is either stimulated by means of a source of white light 645, or by means of a suitable laser source. The set-up further comprises a detection unit 650 adapted for detecting the intensity of the fluorescence light emitted by the fluorescent compounds of the sample. For distinguishing different kinds of fluorescent marker tags, the detection unit 650 might as well be adapted for recording a fluorescence spectrum as a function of wavelength. Furthermore, the measurement set-up may additionally comprise another detection unit adapted for recording the sample's absorption spectrum.

In Fig. 5C, yet another type of tagged species 535 is depicted. Upon application of a stimulus, the tagged species 535 is fragmented into an untagged species 540, and into a multitude of secondary molecules 545 that act as a catalytic for catalyzing further chemical reactions. The products of these chemical reactions might then be detected using any of the detection techniques shown in Fig. 6A to 6C, or any other detection mechanism. For example, an optical resonant detection technique like e.g. RIFS (Reflectometry Interference Spectroscopy) might be used for detecting the products of respective chemical reactions.

In the embodiments shown in Fig. 5A, 5B and 5C, after applying a stimulus, the untagged species 505, 520, 540 is regenerated. With this regard, it is advantageous that the marker tag is cleaved off. Thus, the properties of the original untagged sample species can be determined during further analysis (e.g. when providing the regenerated untagged species to a mass spectrometer).

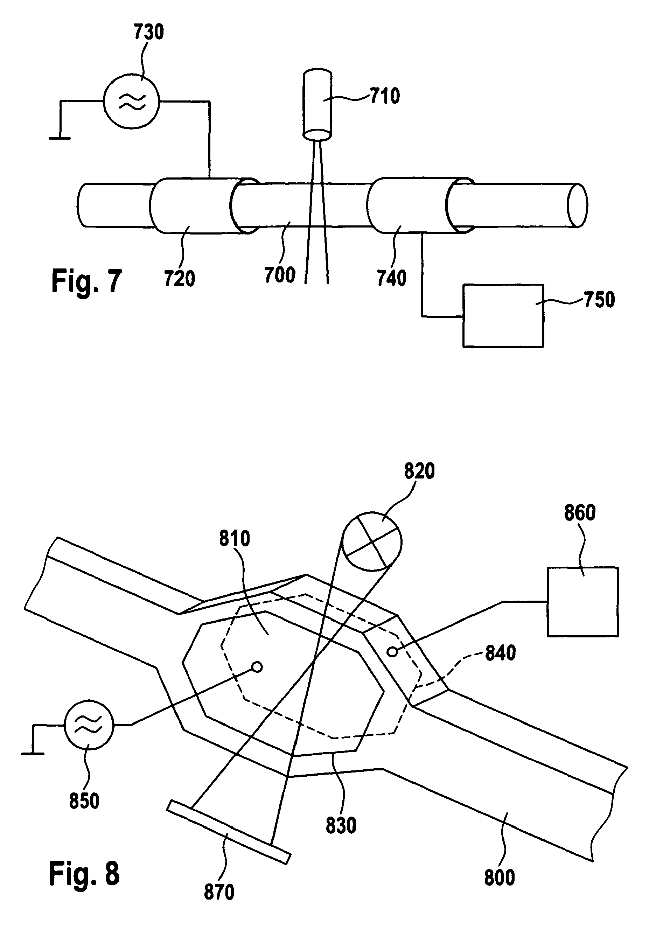

Fig. 7 shows a typical set-up for stimulated detection. The sample within the detection flow path 700 is subjected to laser light emitted by a laser 710. In Fig. 7, the detection flow path 700 has been realized by means of a glass capillary. The sample may comprise a species of interest that has been labeled with a marker tag according to the embodiment of Fig. 5A. When laser light is applied to the tagged species, charged ions are cleaved off. The corresponding rise of the sample's conductivity is detected by means of a contactless conductivity cell comprising a transmitter electrode 720, which is coupled to an AC power supply 730, and a receiver electrode 740, which is connected to a detection unit 750. In this embodiment, the stimulus for photogenerating charged ions is applied at the same location where the detection takes place. By switching the laser source 710 on and off, the detectable property of the species of interest can be switched on and off as well. Thus, the contribution of the charged ions can be distinguished from the contribution of the background electrolyte.

In yet another embodiment, the intensity of the laser light emitted by the laser 710 is modulated according to some kind of modulation pattern. For example, the light intensity might be modulated with a modulation frequency in the range of 1 to 10 kHz. When analyzing the detection signal, a response signal component that corresponds to the modulation pattern might be detected. By analyzing the intensity and the phase shift of said response signal component, properties of the sample compounds can be derived.

A further embodiment of the present invention is shown in Fig. 8. In this embodiment, a detection flow path 800 and a detection cell 810 are implemented as a part of a microfluidic chip device that has been made using micro-structuring technologies such as e.g. etching, laser ablation, direct molding. The measurement set-up shown in Fig. 8 comprises a source of white light 820 that is adapted for irradiating light with a broad range of wavelengths onto the sample volume in the detection cell 810. By means of this stimulus signal, a respective species of interest is transformed into derived species that comprise charged ions, whereby the charged ions modify the sample's conductivity. For detecting the sample's conductivity, the detection cell 810 is equipped with two contactless electrodes 830, 840, with one of said electrodes being connected to an AC power supply 850, and with the other one of said electrodes being connected to a detection unit 860. In addition to determining the sample's conductivity, the measurement set-up might comprise a sensor 870 adapted for recording the spectrum of light components transmitted through the detection cell 810.

In the embodiment shown in Fig. 8, light has been used as a stimulus, and a HF field has been applied to the sample volume for detecting the sample's conductivity. In an alternative embodiment, one might as well apply a HF field as a stimulus to the sample and detect the fluorescence of the sample in the detection volume.

For determining a respective detectable property of the background electrolyte before a stimulus is applied, a calibration cell might additionally be provided upstream of the activation facility. The calibration cell might be adapted for determining the conductivity of the background electrolyte. By comparing the conductivity before and after applying a stimulus to the sample, the contribution of the species of interest to the overall conductivity can be derived. This allows to approximately determining the concentration of the species of interest.

For detecting a certain species of interest, said species of interest can be permanently labeled in advance. Alternatively, marker tags adapted for dynamically labeling a certain species, a certain binding site, or for identifying certain properties like hydrophilic or hydrophobic behavior can be used. The utilization of a wide variety of different marker tags allows analyzing the properties of complex biomolecules.

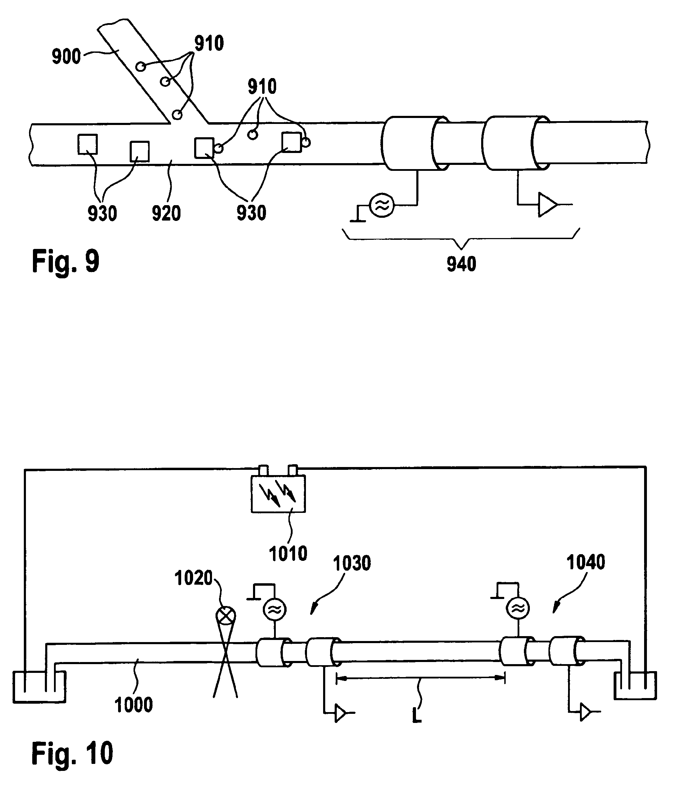

Fig. 9 shows a measurement set-up in which a species of interest is dynamically labeled before being detected. The measurement set-up comprises an injection flow path 900 for injecting marker tags 910 into the detection flow path 920. There, the marker tags 910 bind and unbind dynamically to molecules of interest 930, or to specific binding sites. The fraction of the marker tags 910 that is attached to molecules of interest 930 corresponds to an equilibrium constant. The equilibrium constant is a measure of the affinity between the marker tags 910 and the molecules of interest 930. Labeled molecules are detected in a subsequent detection unit 940, which might e.g. be a contactless conductivity cell.

In Fig. 10, a measurement set-up comprising two detection cells is shown. Across the entire flow path 1000, a high voltage 1010 is applied. The set-up comprises an activation facility 1020 adapted for applying a stimulus to the sample, a first detection cell 1030, and a second detection cell 1040, which is located downstream of the first detection cell 1030. The first detection cell 1030 and the second detection cell 1040 are separated by a distance L. Charged compounds that have been generated by a stimulus of the activation facility 1020 are initially detected by the first detection cell 1030. Then, the various charged compounds are electrophoretically separated in the part of the flow path between the first detection cell 1030 and the second detection cell 1040. Different marker tags are separated according to their respective mobilities. At the second detection unit 1040, molecular compounds with a large mobility µ will be detected first. Later, compounds with a lower value of µ will be detected.

The set-up of Fig. 10 allows to distinguish the contributions of the various marker tags to the detected conductivity. Hence, different marker tags, which might be characterized by different specific interactions with certain molecular species and certain binding sites, can be utilized simultaneously. The set-up of Fig. 10 allows to separately detect the contribution of the untagged species of interest and the contributions of the detached marker tags.

Furthermore, for each of the species, a runtime Δt related to the distance L between the first detection cell 1030 and the second detection cell 140 can be determined. From said runtime Δt, the mobility of the respective species can be derived. As soon as the mobility µ and the contribution to conductivity are known for a certain molecular species, the concentration of said species can be determined.

## Claims

1. A method for detecting at least one sample compound of a sample, the method comprising the following steps:
labeling said sample compound with a marker tag which comprises a polymeric portion (330) with a multitude of segments, whereby at least one of the bonds between the segments is a cleavable bond;
inducing at least one of a physical and a chemical modification of at least one of the sample compounds, by providing at least one of:
irradiating light with predefined spectral components onto the sample,
heating up at least parts of the sample, and
applying a HF field to the sample,
in order to fragment the tagged sample compound into a plurality of cleavable derived species and to break said at least one cleavable bond; and
detecting at least one of an electrical property and the pH value of the sample as affected by the presence of at least one of the derived species.

2. The method of claim 1, further comprising a step of separating the one or more derived species by means of a separation flow path arranged downstream of the first detection cell.

3. The method of any one of the claims 1 or 2, wherein the electrical property of the sample, is one of resistance, impedance, reactance, conductivity, complex conductivity, relative permittivity, and dielectric dispersion.

4. The method of any one of the claims 1 to 3, wherein the modification induced by the activation facility is an irreversible modification.

5. A measurement set-up for detecting sample compounds of a sample, the measurement set-up comprising:
a detection flow path (700,800) with a first detection cell, and
a sample compound labeled with a marker tag which comprises a polymeric portion (330) with a multitude of segments, whereby at least one of the bonds between the segments is a cleavable bond,
wherein
the detection cell comprises:
an activation facility (710,820) comprising at least one of:
a light source (400) adapted for irradiating light with predefined spectral components onto the sample,
a heater element (440) adapted for heating up at least parts of the sample, and
a HF source (435) adapted for applying a HF field to the sample; wherein the activation facility (710, 820) is adapted for inducing at least one of a physical and a chemical modification of at least one sample compound, wherein the sample compound is labeled with a marker tag in advance, in order to derive one or more species, and
a detection facility (720-750, 830-860) adapted for detecting a detectable property that is directly or indirectly affected by the presence of at least one of the derived species,
wherein the detection cell is adapted to fragment the tagged species into a plurality of derived species by applying a stimulus adapted for breaking up cleavable bonds of the tagged species; and
wherein the property is at least one of:
the sample's pH value, and
an electrical property.

6. The measurement set-up of claim 5, wherein the modification induced by the activation facility is an irreversible modification.

7. The measurement set-up of the claims 5 to 6 wherein the derived species comprise at least one of: charged ions (510) that modify the sample's electrical properties, acidic compounds (525) that reduce the sample's pH value, alkaline compounds (530) that increase the sample's pH value.

8. The measurement set-up of any one of the claims 5 to 7, wherein the electrical property is one of resistance, impedance, reactance, conductivity, complex conductivity, relative permittivity, dielectric dispersion.

9. The measurement set-up of any one of the claims 5 to 8, wherein the detection facility comprises at least one of: an RIfS unit, a pH meter, a unit for measuring intensity of HF radiation.

10. The measurement set-up of any one of the claims 5 to 9, wherein the detection facility comprises a transmitter electrode (605) adapted for coupling an AC current to the sample, and a receiver electrode (620) adapted for receiving the AC current that has been coupled into the sample.

11. The measurement set-up of any one of the claims 5 to 10, comprising at least one of the features:
a separation flow path that precedes the detection flow path.
a second separation flow path arranged downstream of the first detection cell (1030), said second separation flow path being adapted for separating the one or more derived species, a second detection cell (1040) adapted for detecting a detectable property that is directly or indirectly affected by the presence of at least one of the derived species that have been separated by the second separation flow path.
a calibration cell located upstream of the first detection cell, said calibration cell being adapted for determining the detectable property of the background electrolyte.

## Patentansprüche

1. Ein Verfahren zum Detektieren zumindest eines Probenstoffes einer Probe, wobei das Verfahren die folgenden Schritte aufweist:
Kennzeichnen des Probenstoffes mit einem Markierungstag, welches einen polymerischen Abschnitt (330) mit einer Vielzahl von Segmenten aufweist, wobei zumindest eine der Bindung zwischen den Segmenten eine spaltbare Bindung ist,
Herbeiführen zumindest eines von einer physikalischen und einer chemischen Modifikation von zumindest einer der Probenstoffe, mittels Bereitstellen zumindest eines von:
Einstrahlen von Licht mit vordefinierten spektralen Komponenten auf die Probe,
Aufheizen von zumindest Teilen der Probe, und
Anlegen eines HF-Feldes an die Probe,
um den getaggten Probenstoff in eine Mehrzahl von abgeleiteten Spezies zu fragmentieren und die zumindest eine spaltbare Bindung zu brechen, und
Detektieren von zumindest einem von einer elektrischen Eigenschaft und dem pH-Wert der Probe als mittels der Gegenwart von zumindest einem der abgeleiteten Spezies beeinflusst.

2. Das Verfahren gemäß Anspruch 1, welches ferner einen Schritt eines Separierens der einen oder mehr abgeleiteten Spezies mittels eines Separationsflusspfades aufweist, welcher stromabwärts der ersten Detektionszelle angeordnet ist.

3. Das Verfahren gemäß irgendeinem der Ansprüche 1 oder 2, wobei die elektrische Eigenschaft der Probe eine ist aus Widerstand, Impedanz, Reaktanz, Leitfähigkeit, komplexer Leitfähigkeit, relative Permetivität und dielektrische Dispersion.

4. Das Verfahren gemäß irgendeinem der Ansprüche 1 bis 3, wobei die Modifikation, welche mittels der Aktivierungseinrichtung eingeführt ist, eine irreversible Modifikation ist.

5. Ein Messaufbau zum Detektieren von Probenstoffen einer Probe, wobei der Messungsaufbau aufweist:
einen Detektionsflusspfad (700, 800) mit einer ersten Detektionszelle, und
einen Probenstoff, welcher mit einem Markierungstag gekennzeichnet ist, welches einen polymerischen Abschnitt (330) mit einer Vielzahl von Segmenten aufweist, wobei zumindest eine von den Bindungen zwischen den Segmenten eine spaltbare Bindung ist,
wobei
die Detektionszelle aufweist:
eine Aktivierungseinrichtung (710, 820), welche zumindest eines aufweist von:
einer Lichtquelle (400), welche zum Einstrahlen von Licht mit vordefinierten spektralen Komponenten auf die Probe angepasst ist,
einem Heizelement (440), welches zum Aufheizen zumindest von Teilen der Probe angepasst ist, und
einer HF Quelle (435), welche zum Anlegen eines HF Feldes an die Probe angepasst ist,
wobei die Aktivierungseinrichtung (710, 820) zum Herbeiführen von zumindest einem von einer physikalischen und einer chemischen Modifikation von zumindest einem Probenstoff angepasst ist, wobei der Probenstoff im Vorhinein mit einem Markierungstag gekennzeichnet ist, um eine oder mehr Spezies abzuleiten, und eine Detektionseinrichtung (720-750, 830-860), welche zum Detektieren einer detektierbaren Eigenschaft angepasst ist, welche direkt oder indirekt mittels der Gegenwart von zumindest einer der abgeleiteten Spezies beeinflusst ist,
wobei die Detektionszelle angepasst ist, um mittels Anlegens einer Stimulierung, welche zum Aufbrechen von spaltbaren Bindungen der getaggten Spezies angepasst ist, die getaggte Spezies in eine Mehrzahl von abgeleiteten Spezies zu fragmentieren, und
wobei die Eigenschaft zumindest eine ist von:
dem pH-Wert der Probe, und
eine elektrische Eigenschaft.

6. Der Messaufbau gemäß Anspruch 5, wobei die Modifikation, welche mittels der Aktivierungseinrichtung herbeigeführt ist, eine irreversible Modifikation ist.

7. Der Messaufbau gemäß Anspruch 5 oder 6, wobei die abgeleitete Spezies zumindest eines aufweist von: geladenen Ionen (510), welche die elektrische Eigenschaften der Probe modifizieren, säurehaltige Stoffe (525), welche den pH-Wert der Probe reduzieren, basische Stoffe (530), welche den pH-Wert der Probe vergrößern.

8. Der Messaufbau gemäß irgendeinem der Ansprüche 5 bis 7, wobei die elektrischen Eigenschaft eine ist von Widerstand, Impedanz, Reaktanz, Leitfähigkeit, komplexer Leitfähigkeit, relative Permetivität, dielektrische Dispersion.

9. Der Messaufbau gemäß irgendeinem der Ansprüche 5 bis 8, wobei die Detektionseinrichtung zumindest eines aufweist von: einer RIfS-Einheit, einem pH-Meter, einer Einheit zum Messen der Intensität von HF-Strahlung.

10. Der Messaufbau gemäß irgendeinem der Ansprüche 5 bis 9, wobei die Detektionseinrichtung eine Transmitterelektrode (605), welche zum Koppeln eines AC-Stroms an die Probe angepasst ist, und eine Empfängerelektrode (620) aufweist, welche zum Empfangen des AC-Stroms angepasst ist, welcher in die Probe gekoppelt worden ist.

11. Der Messaufbau gemäß irgendeinem der Ansprüche 5 bis 10, welcher zumindest eines der Merkmale aufweist von:
einen Separationsflusspfad, welcher dem Detektionsflusspfad vorangeht,
einen zweiten Separationsflusspfad, welcher stromabwärts der ersten Detektionszelle (1030) angeordnet ist, wobei der zweite Separationsflusspfad zum Separieren der einen oder mehr abgeleiteten Spezies angepasst ist, wobei eine zweite Detektionszelle (1040) zum Detektieren einer detektierbaren Eigenschaft angepasst ist, welche direkt oder indirekt mittels der Gegenwart von zumindest einer der abgeleiteten Spezies beeinflusst ist, welche mittels des zweiten Separationsflusspfades separiert worden sind,
eine Kalibrationszelle, welche stromaufwärts der ersten Detektionszelle lokalisiert ist, wobei die Kalibrationszelle zum Bestimmen der detektierbaren Eigenschaft der Hintergrundelektrolyte angepasst ist.

## Revendications

1. Procédé de détection d'au moins un composé échantillon d'un échantillon, le procédé comprenant les étapes suivantes :
le marquage dudit composé échantillon avec un marqueur qui comprend une partie polymère (330) ayant une multitude de segments, moyennant quoi au moins une des liaisons entre les segments est une liaison clivable ;
l'induction d'au moins une modification choisie parmi une modification physique et une modification chimique d'au moins un des composés échantillons, au moyen d'au moins une des actions suivantes :
l'irradiation d'une lumière ayant des composants spectraux prédéfinis sur l'échantillon,
le chauffage d'au moins des parties de l'échantillon, et
l'application d'un champ HF à l'échantillon,
afin de fragmenter le composé échantillon marqué en une pluralité d'espèces dérivées et de rompre ladite au moins une liaison clivable ; et
la détection d'au moins une propriété électrique et de la valeur du pH de l'échantillon ainsi affecté par la présence d'au moins une des espèces dérivées.

2. Procédé selon la revendication 1, comprenant en outre une étape de séparation d'une ou plusieurs espèces dérivées au moyen d'un passage de séparation situé en aval de la première cellule de détection.

3. Procédé selon l'une quelconque des revendications 1 ou 2, dans lequel la propriété électrique de l'échantillon est choisie parmi la résistance, l'impédance, la réactance, la conductivité, la conductivité complexe, la permittivité relative et la dispersion diélectrique.

4. Procédé selon l'une quelconque des revendications 1 à 3, dans lequel la modification induite par l'installation d'activation est une modification irréversible.

5. Configuration de mesure pour détecter des composés échantillons d'un échantillon, la configuration de mesure comprenant :
un passage de détection (700, 800) doté d'une première cellule détection, et
un composé échantillon marqué avec un marqueur qui comprend une partie polymère (330) ayant une multitude de segments, moyennant quoi au moins une des liaisons entre les segments est une liaison clivable ;
dans laquelle
la cellule détection comprend :
une installation d'activation (710, 820) comprenant au moins un des éléments suivants :
une source de lumière (400) conçue pour irradier une lumière ayant des composants spectraux prédéfinis sur l'échantillon,
un élément chauffant (440) conçu pour chauffer au moins des parties de l'échantillon, et
une source HF (435) conçue pour appliquer un champ HF à l'échantillon ;
dans laquelle l'installation d'activation (710, 820) est conçue pour induire au moins une modification choisie parmi une modification physique et une modification chimique d'au moins un composé échantillon, le composé échantillon étant préalablement marqué avec un marqueur, afin de dériver une ou plusieurs espèces, et
une installation de détection (720-750, 830-860) conçue pour détecter une propriété détectable qui est directement ou indirectement affectée par la présence d'au moins une des espèces dérivées,
dans laquelle la cellule de détection est conçue pour fragmenter les espèces marquées en une pluralité d'espèces dérivées par l'application d'un stimulus capable de rompre les liaisons clivables des espèces marquées ; et
dans laquelle la propriété est au moins une propriété choisie parmi :
la valeur du pH de l'échantillon, et
une propriété électrique.

6. Configuration de mesure selon la revendication 5, dans laquelle la modification induite par l'installation d'activation est une modification irréversible.

7. Configuration de mesure selon les revendications 5 à 6, dans laquelle les espèces dérivées comprennent au moins une espèce choisie parmi : des ions chargés (510) qui modifient les propriétés électriques de l'échantillon, des composés acides (525) qui réduisent la valeur du pH de l'échantillon, des composés alcalins (530) qui augmentent la valeur du pH de l'échantillon.

8. Configuration de mesure selon l'une quelconque des revendications 5 à 7, dans laquelle la propriété électrique est choisie parmi la résistance, l'impédance, la réactance, la conductivité, la conductivité complexe, la permittivité relative et la dispersion diélectrique.

9. Configuration de mesure selon l'une quelconque des revendications 5 à 8, dans laquelle l'installation de détection comprend au moins un des appareils suivants : une unité RIfS, un pH-mètre, une unité permettant de mesurer l'intensité d'un rayonnement HF.

10. Configuration de mesure selon l'une quelconque des revendications 5 à 9, dans laquelle l'installation de détection comprend une électrode émettrice (605) conçue pour coupler un courant alternatif à l'échantillon et une électrode réceptrice (620) conçue pour recevoir le courant alternatif qui a été couplé dans l'échantillon.

11. Configuration de mesure selon l'une quelconque des revendications 5 à 10, comprenant au moins un des éléments suivants :
un passage de séparation qui précède le passage de détection,
un second passage de séparation situé en aval de la première cellule de détection (1030), ledit second passage de séparation étant conçu pour séparer l'espèce dérivée ou les espèces dérivées, une seconde cellule de détection (1040) conçue pour détecter une propriété détectable qui est directement ou indirectement affectée par la présence d'au moins une des espèces dérivées qui ont été séparées par le second passage de séparation,
une cellule d'étalonnage située en amont de la première cellule de détection, ladite cellule d'étalonnage étant conçue pour déterminer la propriété détectable de l'électrolyte d'arrière-plan.
